# EUROPEAN PATENT APPLICATION

(11) **EP 2 881 010 A1**
(43) Date of publication of application: **10.06.2015**
(21) Application number: 14196477.5
(22) Date of filing: 05.12.2014
(51) Int. Cl.: A47B 96/06, F16B 12/22

(54) **Fastening system for furniture**

(30) Priority: 06.12.2013 IT PD20130335
(71) Applicant: PERMO s.r.l., 35024 Bovolenta (PD) (IT)
(72) Inventor: Francescon, Flavio, 35126 Padova (IT)
(74) Representative: Morabito, Sara

(57) **Abstract**

A fastening system (100) for attaching a shelf (4) or other supporting element of an item of furniture to a structure (5) of an item of furniture comprises: a first supporting element (1) provided with a main body (11) shaped so as to form a through groove (12) in which a connecting pin (3, 3') can be housed, the pin (3, 3') being able to move within the groove (12) along an axis of movement (X) defined thereby and a securing member (117) to secure the first support (1) to the shelf (4), a second supporting element (2) provided with a main body (21) shaped so as to form a slot (22, 23) comprising a slide channel (24, 25) for the insertion of a connecting pin (3, 3'), the pin (3, 3') being capable of movement within the slide channel (24, 25) along a further axis of movement (X') and a second securing member (217) to secure the second support (2) to the shelf (4), the slot (22, 23) comprising a hole (26, 27) communicating with the slide channel (24, 25) to allow the pin (3) to move between the slide channel (24, 25) and the hole (26, 27) and being provided to house the pin (3), the hole (26, 27) being vertically at a distance with respect to the further axis of movement (X') so as to prevent the connecting pin (3) from escaping through movement along the further axis of movement (X').

## Description

### Field of the invention

This invention relates to a fastening system for attaching a shelf or other supporting member of furniture to the structure of an item of furniture.

### State of the art

Typically an item of furniture will comprise vertical uprights, known as sidepieces or side panels, horizontal upper and lower panels bounding the structure of the item of furniture, known as the top and bottom respectively, and possibly one or more intermediate shelves.

Various systems for inserting and attaching the shelves to the uprights are known in the art: for example the shelf may be supported on supporting pins attached to the upright and projecting from it so as to form supporting elements for the shelf, or the shelf may be inserted into suitable recesses made along the sides of the upright.

Italian patent no. IT1402758 describes a connector system for attaching a shelf to an upright comprising two supports intended to be attached to a shelf having a hollow body to house a connecting pin attached to the upright in such a manner that it can move in the direction of an axis of insertion. The connecting pin has a shank and a head having radial dimensions larger than the shank.

The hollow body is shaped so as to form a channel passing through the support in which the head of the pin moves as the shelf is inserted. The channel is bounded by a rear wall, an upper wall and a lower wall and by two frontal edges projecting from the lower and upper wall respectively towards the upper and lower wall and defining an opening for housing the shank of the pin. The opening has small dimensions in comparison with the dimensions of the channel, so that the head of the pin cannot pass through the opening and the pin cannot be moved with respect to the channel in a direction perpendicular to the axis of insertion.

When the shelf is correctly positioned, the pins are positioned in a central position on the supports and the head of each pin acts on the wall of the front edges deforming it in a direction perpendicular to the direction of the axis of insertion, that is towards the upright. This deformation makes it possible to produce a relative tensile force between the shelf and the upright.

The front edges of the support are pressed against the upright and the shelf and upright are then attached to each other.

However this system is not particularly stable, especially if the shelves are deformed, for example when the shelf is loaded with considerable weights. IT 1391435 describes a system for inserting and securing a shelf which is frontally inserted into a sectionable item of furniture which comprises at least two uprights and a plurality of shelves. Connecting pins for subsequently attaching the shelves to the uprights are attached to the uprights at the desired positions for the shelves.

Each shelf of the item of furniture is provided with a milled recess on both the side walls, that is on the walls which are intended to face the uprights when in use. Each milled recess is intended to receive a first and second support shaped so that they are hidden in the abovementioned groove in a position which is longitudinally distal or in a distal position in the direction in which the shelf is inserted.

Both the first and the second support are provided with a connecting pin through which the first and second supports are attached to the shelf.

The first support comprises a "C"-shaped body dimensioned so as to form a through channel within which the head of a connecting pin can enter and move. The head of the connecting pin moves in the channel along the axis along which the shelf is inserted.

The second support comprises a body shaped so as to define a closed channel in which the head of the connecting pin moves and defines an attachment seat in which the head of the connecting pin is received when the shelf is inserted onto the uprights.

The channel is bounded by a pair of resilient teeth which reversibly immobilise the pin within the attachment seat.

One defect of this system is that it is not particularly stable.

In fact, in order to be able to extract the shelf from the item of furniture it is necessary and sufficient to move the shelf along the axis of insertion in a direction opposite the direction of insertion and apply a tensile force sufficient to overcome the resilient force exerted by the resilient teeth. These teeth may also deform over time and in circumstances of repeated and prolonged use, as a result of which the strength of the system suffers deterioration.

### Object of the invention

The technical problem underlying the invention is that of providing a fastening system for attaching a shelf to the structure of an item of furniture which overcomes the problems mentioned with reference to the known art.

In particular, one object of the invention is to provide a fastening system for attaching a shelf to the structure of an item of furniture in which the shelf is firmly but removably connected to the structure of the item of furniture and which makes it possible to avoid undesired movement of the shelf away from the structure of the item of furniture.

These and other objects are accomplished through a fastening system constructed in accordance with claim 1.

The system according to the invention allows the item of furniture to be repeatedly assembled and dismantled while at the same time ensuring that the shelves are securely attached to the uprights even during subsequently assembly operations.

The system according to the invention is also particularly dimensionally stable over time and strong.

In the system according to the invention deformations are extremely limited and therefore so also are breakages following prolonged use.

Although explicit reference is made to shelves or brackets mounted to form a substantially horizontal supporting plane in the description below, the system according to the invention is also suitable for use with panels forming supporting planes which are not horizontal.

The system is also suitable for use with supporting elements other than shelves or brackets, for example elements for hanging clothes, ties, or even vertical panels, etc.

Further characteristics of the invention will be apparent from the following detailed description with reference to the appended figures.

### Brief description of the figures

Figure 1 is a perspective view of a first supporting element of the fastening system according to the invention in a first operating configuration;
Figure 2 is a view from above of the support in Figure 1 in partial cross-section;
Figure 3 is a side view of the support in Figure 1 in cross-section;
Figures 4-6 are views of the first supporting element corresponding to

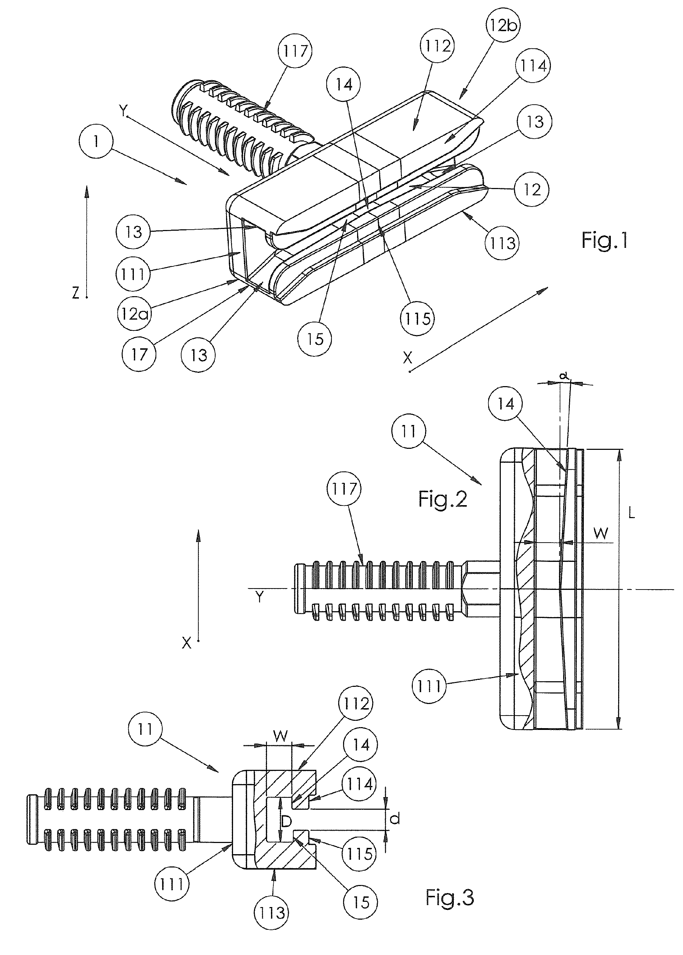

Figures 1-3 respectively but relating to a second operating configuration;

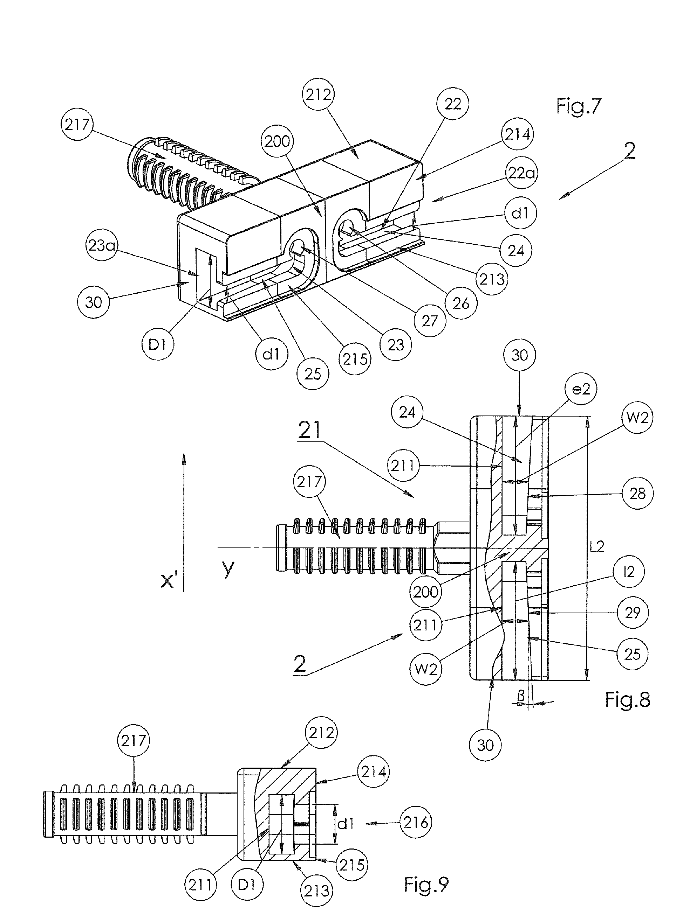

Figure 7 is a perspective view of a second supporting element of the fastening system according to the invention in a first operating configuration;
Figure 8 is a view from above of the support in Figure 7 in partial cross-section;
Figure 9 is a side view of the support in Figure 7 in cross-section;

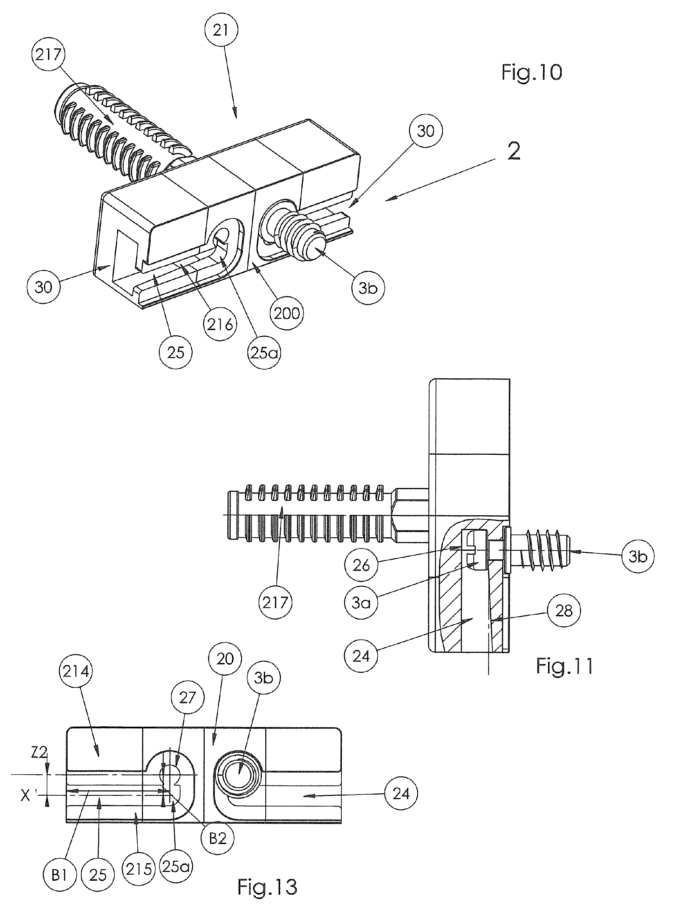

Figures 10-12 are views of the second supporting element corresponding to
Figures 7-9 respectively, but relating to a second operating configuration;
Figure 13 is a front view of the support in Figure 10;

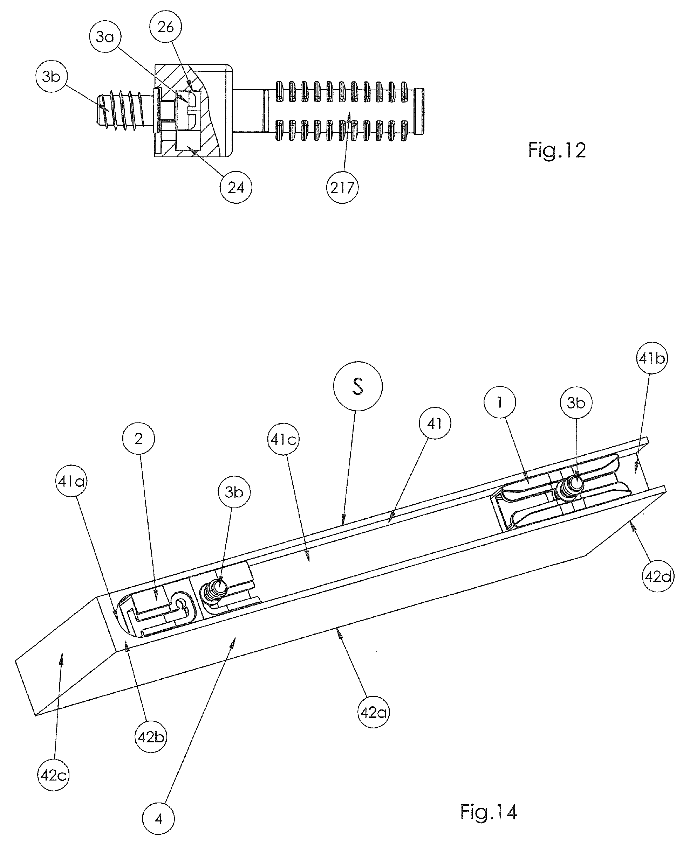

Figure 14 is a perspective view of a shelf provided with the fastening system according to the invention;

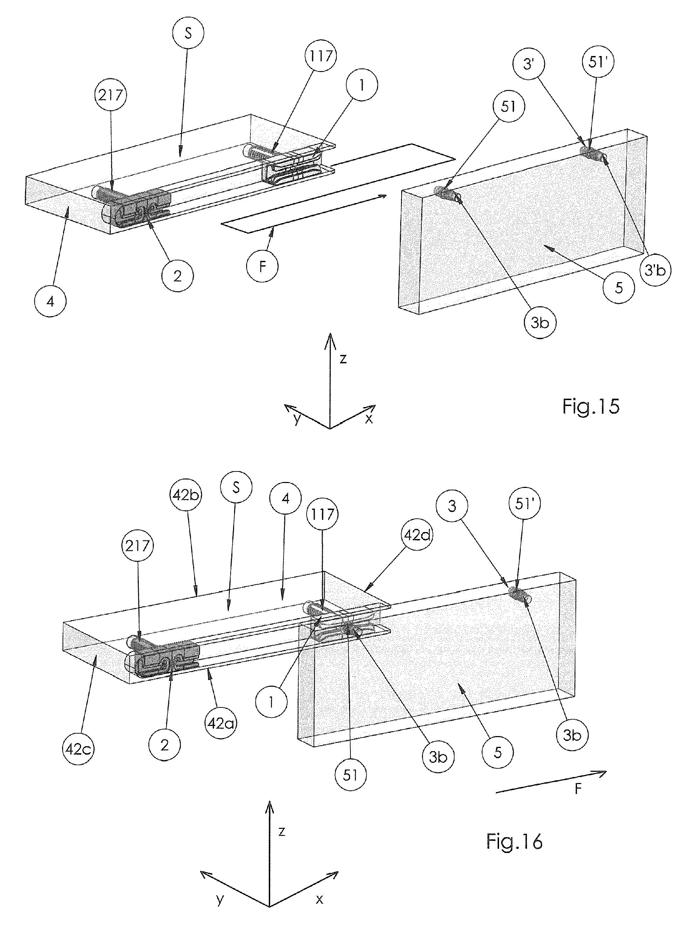

Figures 15 and 16 are diagrammatical views of the shelf in Figure 14 and an upright of the item of furniture at two different stages in assembly.

### Detailed description of the invention

The figures show a fastening system 100 for attaching a shelf 4, or other furniture supporting element, to a structure of an item of furniture.

In particular the fastening system 100 according to the invention is particularly suitable for attaching shelves to the vertical uprights or sides of an item of furniture or in general furniture elements located perpendicular to each other.

In the version shown, fastening system 100 is used to attach a shelf to the structure of an item of furniture, but fastening system 100 according to the invention may be used to attach a supporting member other than a shelf, such as for example elements for supporting clothes, ties or trousers, vertical panels, or even furniture elements located at an angle of other than 90° between them to the structure of an item of furniture.
fastening system 100 comprises a first supporting element 1, shown in greater detail in Figures 1-6, and a second supporting element 2, shown in greater detail in Figures 7-12.

First supporting element 1 and second supporting element 2 are intended to be associated with a shelf 4, as may more easily be seen in Figure 14, to attach shelf 4 to the uprights of an item of furniture, one upright 5 being partly illustrated in Figures 15 and 16.

In the version shown, shelf 4 is of rectangular shape and is bounded by two longitudinal edges 42a, 42b which when in use are intended to face uprights 5 of the structure of an item of furniture to which shelf 4 must be attached, and two opposite transverse edges 42c, 42d, one of which when in use is intended to constitute the visible edge of shelf 4.

A milled recess 41 having a closed extremity 41a and an open extremity 41b is provided in each of longitudinal edges 42a, 42b. Closed extremity 41a is provided on the part of transverse edge 42c which when in use is intended to constitute the visible edge of shelf 4, while open extremity 41b is provided on opposite transverse edge 42d.

Provision of open extremity 41b of milled recess 41 allows shelf 4 to be inserted into upright 5, moving it along a longitudinal axis of insertion X, substantially parallel to longitudinal edges 42a, 42b as will be more particularly described below.

On a bottom portion 41c of milled recess 41 there are formed two holes located in positions longitudinally apart and intended to receive securing elements 117, 217 of first and second supporting elements 1, 2 respectively in order to attach the latter to shelf 4, as may be seen in Figure 14 and as is more particularly described below.

Uprights 5 are generally of flat shape and are provided with pairs of connecting holes suitably positioned along the vertical axis Z of the upright so that shelves 4 can be attached to upright 5 at different desired heights. Each pair of connecting holes comprises a proximal hole 51 which when in use is intended to face the visible surface of the item of furniture and an opposite distal hole 51'. A corresponding connecting pin 3, 3' intended to act together with the first and/or second supporting element 1, 2 to attach shelf 4 to the upright, as will be more particularly described below, is inserted into connecting holes 51, 51' of each pair of connecting holes.

First and second connecting pins 3, 3' are structurally identical and are indicated by different reference numbers for convenience of reading.

Each connecting pin 3, 3' comprises a shank 3b, 3'b intended to be inserted into a connecting hole 51, 51' in upright 5, and a head 3a, 3'a having radial dimensions larger than those of corresponding shank 3b, 3'b.

Each connecting pin 3, 3' is positioned so that its head 3a, 3a' faces shelf 4 to engage with first and/or second supporting element 1, 2 to attach shelf 4 to upright 5.

Shank 3b, 3'b of pin 3, 3' is provided with a thread or radial fins or other pressure or screw connecting means intended to engage with the wall of the hole in order to securely attach pin 3, 3' to upright 5. In a version not illustrated, the shank of the pin has the same radial dimensions as the radial dimensions of the head.

In particular, as will be more particularly described below, when shelf 4 is attached to upright 5, first pin 3 will be inserted into second supporting element 2 and second pin 3' will be inserted into first supporting element 1. Uprights 5 are of a flat shape and extend along a vertical axis Z and a longitudinal axis X.

Considering a three-dimensional reference system XYZ, the vertical axis will be indicated below as the Z axis, the longitudinal axis as the X axis and the transverse or horizontal axis as the Y axis.

In the version illustrated, connecting holes 51, 51' of each pair of holes are positioned on the same longitudinal axis at a desired distance from each other which depends on the dimensions of upright 5 and shelf 4.

In this way, shelf 4 may be positioned horizontally, that is its supporting surface S will lie in a plane parallel to the XY plane, but in other versions holes 51, 51' of a same pair of holes may be positioned at different heights with respect to vertical axis Z, at a distance from each other along longitudinal axis X.

First supporting element 1 comprises a main body 11 shaped so as to form a groove 12 which extends along the entire length "L" of supporting element 1 in which head 3a of a connecting pin 3 may be housed with the ability to move along a longitudinal axis of movement X. Groove 12 is open at both longitudinal ends 12a, 12b to allow head 3'a of pin 3' to enter/leave groove 12.

Main body 11 comprises a rear wall 111 defining the end of groove 12 and two opposite walls located transversely with respect to rear wall 111, for simplicity defined as upper wall 112 and lower wall 113 below.

First supporting element 1 is symmetrical with respect to a transverse axis Y located perpendicularly to longitudinal axis of movement X.

Lower wall 113 and upper wall 112 comprise inclined ramps 13 at their opposite longitudinal extremities so as to form entry openings 30 to groove 12 which have greater dimensions along vertical axis Z than the dimensions of groove 12 at the opposite longitudinal extremities 12a, 12b of groove 12 so as to allow head 3a of the pin to enter groove 12.

An upper front edge 114 and a lower front edge 115 projecting from sides opposite each other, that is towards lower wall 113 and upper wall 112 respectively, so as to form a front opening 116 for groove 12 having a width "d" which is smaller than the width "D" of groove 12 along an axis transverse to longitudinal axis of movement X, in this case along vertical axis Z, extend from upper wall 112 and lower wall 113 respectively.

Width "d" of front opening 116 is such as to allow shank 3'b of pin 3' to pass through it, but not its head 3'a. In this way in order to extract head 3'a of pin 3' from groove 12 it is necessary to cause it to move with respect to groove 12 along longitudinal axis of movement X as far as one longitudinal extremity 12a or 12b.

In this way head 3'a of pin 3' is prevented from leaving groove 12 following a movement along a direction transverse to longitudinal axis of movement X, in particular along transverse axis Y.

Inner walls 14, 15 of upper front edge 114 and lower front edge 115 or the walls facing groove 12 are inclined at an angle of inclination α of between 1° and 25°, preferably between 1° and 10°, with respect to the direction of longitudinal axis of movement X. Thus the distance W' between inner walls 14, 15 of upper front edge 114 and lower front edge 115 and rear wall 111 varies along the length of supporting element 1, the distance W being a maximum at opening 30 and a minimum in the central portion of supporting element 1.

In this way, in the course of the relative movement between pin 3' and groove 12, head 3'a of pin 3' moving along inner walls 14, 15 of groove 12 is moved in the direction of transverse axis Y, first close to rear wall 111 generating a corresponding tensile force between shelf 4 and the upright and subsequently away from rear wall 111.

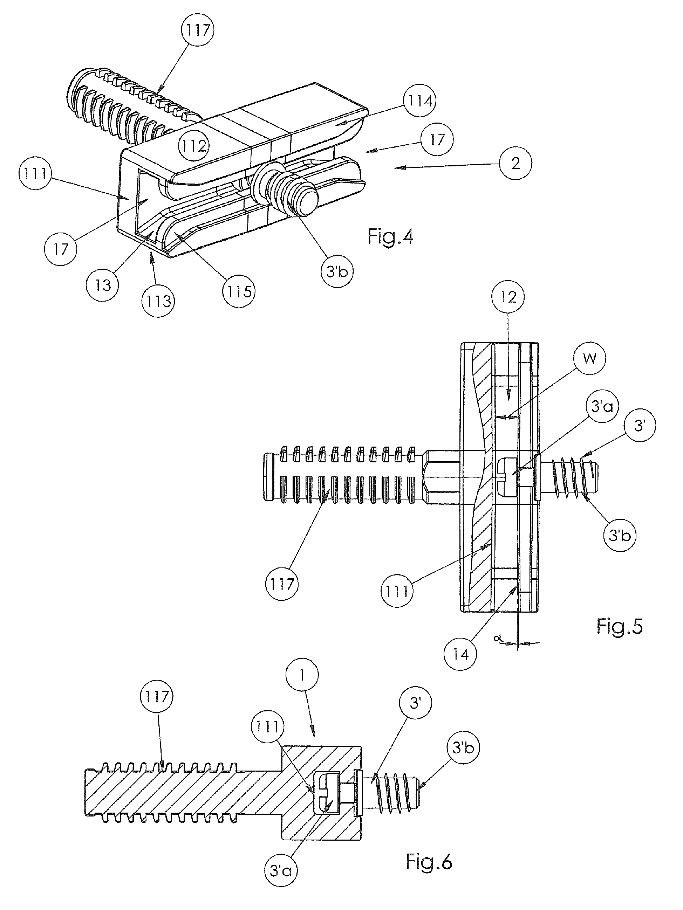

When shelf 4 is mounted on upright 5, pin 3' is located in a longitudinally central position in groove 12, as may better be seen in Figures 4-6, that is in the position of minimum distance W.

In this position inner walls 14, 15 exert a tensile force on head 3'a of pin 3' to press it towards shelf 4. This tensile force makes it possible to attach shelf 4 and upright 5 together and make their mutual connection more stable, as will be more particularly explained below.

As has been mentioned, first supporting element 1 is symmetrical with respect to transverse axis Y and vertical axis Z so that it can be positioned in both orientations in milled recess 41 and assist assembly operations.

First supporting element 1 also comprises a securing element 117 extending from rear wall 111 on the opposite side with respect to groove 12 which is intended to be inserted in a suitable hole provided in the bottom 41c of milled recess 41 in shelf 4 to securely attach first supporting element 1 to shelf 4.

Second supporting element 2 comprises a main body 21 shaped so as to form at least a first and a second slot 22, 23 extending over a length "l2" of length "L2" of second supporting element 2.

Each slot 22, 23 is provided with an entry opening 22a, 23a to allow head 3a of pin 3 to enter/leave slot 22, 23, each opening being provided at one of the two opposite longitudinal extremities of second supporting element 2. Each slot 22, 23 also comprises a channel 24, 25 allowing movement in which head 3a of pin 3 is housed with the ability to move along a further longitudinal axis of movement X'.

Further longitudinal axis of movement X' is parallel to longitudinal axis of movement X of first supporting element 1.

The walls bounding each slot 22, 23 comprise inclined ramps corresponding to respective entry openings 22a, 23a so as to form entry openings to slots 22, 23 which have larger dimensions along vertical axis Z than the dimensions of slide channel 24, 25 to encourage head 3a of the pin to enter slots 22, 23.

Each slot 22, 23 also comprises a hole 26, 27 located at one extremity 24a, 25a opposite corresponding entry opening 22a, 23a of each slide channel 24, 25 and communicating with corresponding slide channel 24, 25 and intended to house head 3a of pin 3 when shelf 4 is inserted into uprights 5, as will be more particularly described below. Each hole 26, 27 is vertically displaced with respect to further axis of movement X' by a distance Z2 of between 1 and 10 mm, preferably between 1.5 and 6.5 mm, along vertical axis Z.

This spacing makes it possible to prevent pin 3 from accidentally leaving slots 22, 23 as a result of lateral movement along further longitudinal axis of movement X', as will be more particularly described below.

When shelf 4 is inserted into upright 5, pin 3 makes an overall movement B comprising a distance moved B1 along further longitudinal axis of movement X' in slide channel 24 or 25 from entry opening 22a or 23a to extremity 24a or 25a and a subsequent distance moved B2 along vertical axis Z from extremity 24a or 25a to enter slide channel 24, 25 in corresponding hole 26, 27.

In a version which is not illustrated, holes 26, 27 may be at a distance from extremity 24a or 25a of slide channel 24, 25 along either vertical axis Z or longitudinal axis of movement X'.

In this case, when shelf 4 is inserted onto upright 5, pin 3 makes a complex movement B comprising a first distance moved along further longitudinal axis of movement X' in slide channel 24 or 25 from opening 22a or 23a to extremity of 24a or 25a, a second distance moved along vertical axis Z from extremity 24a or 25a and a third distance moved along further longitudinal axis of movement X parallel to further longitudinal axis of movement X' in order to enter corresponding hole 26, 27.

In this version pin 3 makes a complex "C" or step-like shaped movement B depending upon the direction of movement of the third length of movement.

In this version second length B2 moved along vertical axis Z may be defined in both directions of axis Z.

In the version illustrated, second supporting element 2 is provided with two different slots 22, 23 located symmetrically on second supporting element 2 with respect to vertical axis Z.

In this way, there is obtained a second symmetrical supporting element 2 which can be attached to shelf 4 in both orientations. This makes assembly operations easier, avoiding the need for careful control of the orientation of second supporting element 2 by the operator.

In other versions which are not illustrated the second supporting element may be provided with a single slot having a hole intended to house the head of the pin when the shelf is inserted onto the uprights, at a distance of Z2 along vertical axis Z from longitudinal axis of movement X'.

A second rear wall 211, a second upper wall 212 and a second lower wall 213 shaped so as to bound slot 22, 23 and a septum 200 to separate the two slots 22, 23 are defined on second supporting element 2.

A second upper front edge 214 and lower front edge 215 projecting towards second lower wall 213 and upper wall 212 respectively so as to form a front opening 216 for each slide channel 24, 25 having a width "d1" considered along vertical axis Z which is smaller than width "D1" of slide channel 24, 25 extend from second upper wall 212 and lower wall 213.

Width "d1" of front opening 216 of each slide channel 24, 25 is such as to allow a shank 3b of pin 3 to pass through but not its head 3a, thus preventing the pin from escaping undesirably as a result of movements along transverse axis Y.

Inner walls 28, 29 of second upper front edge 214 and lower front edge 215, that is the walls facing respective slide channel 24, 25, are inclined at a further angle of inclination β of between 10° and 25°, preferably between 1° and 10°, with respect to the direction of longitudinal axis of movement X.

In this way the further distance W2 between second inner walls 28, 29 of second upper front edge 214 and lower front edge 215 and second rear wall 211 varies along slide channels 24, 25, the further distance W2 being a maximum at entry openings 22a, 23a and a minimum at extremities 24a, 25a.

Thus when there is relative movement between pin 3 and slide channel 24 or 25, head 3a of pin 3 moves along inner walls 28 or 29 and is moved in the direction of transverse axis Y towards second rear wall 211 giving rise to a corresponding tensile force between shelf 4 and upright 5.

Second supporting element 2 also comprises a securing element 217 located on rear wall 211 and extending from the opposite side with respect to slots 22, 23 and intended to be inserted in a suitable hole provided in end 41c of milled recess 41 in shelf 4 to be attached to uprights 5 by the system according to the invention in order to stably secure second supporting element 2 to shelf 4.

Securing elements 117, 217 are provided with a thread or radial fins or other pressure or screw securing elements intended to engage with the wall of the hole in which first or respectively second supporting element 1, 2 is inserted in order to securely attach it to shelf 4.

First and second supporting elements 1, 2 are dimensioned so that they can be inserted invisibly in milled recess 41.

During assembly a first and second supporting element 1, 2 are secured to a shelf 4, inserting corresponding securing elements 117, 217 in the holes provided in end 41c of milled recess 41. Preferably this operation is repeated for each of the two longitudinal milled recesss 41 in shelf 4.

A first and a second connecting pin 3, 3' are inserted into proximal hole 51 and distal hole 51' respectively of a pair of holes provided in upright 5 with corresponding heads 3a, 3a' facing shelf 4 which is to be attached. Subsequently shelf 4 is offered up to upright 5 moving it in the direction of longitudinal axis X with milled recesss 41 facing upright 5 and pushed progressively in the direction of longitudinal axis X as indicated by arrow F in Figures 15 and 16 so that connecting pin 3 is inserted into groove 12 of first supporting element 1. Pin 3 moves in groove 12 guided in that movement by upper front edge 114 and lower front edge 115. As shelf 4 continues to be pushed in the direction of arrow F, pin 3 leaves groove 12. As shelf 4 continues to be pushed in the direction of arrow F, first pin 3 is inserted into one of slots 22, 23 of second supporting element 2, that is the slot having entry opening 22a or 23a facing the opposite side with respect to first supporting element 1, while second pin 3' is inserted in groove 12 of first supporting element 1.

As it continues to be pushed in the direction of arrow F, pin 3 is caused to move in slide channel 24 or 25 to extremity 24a or 25a corresponding to hole 26 or 27, while second pin 3' is moved into a central position of first supporting element 1.

In this position shelf 4 is inclined, that is its supporting surface S does not lie in a horizontal plane.

In this position the user applies a thrust in a vertical direction to shelf 4, that is along vertical axis Z, pushing shelf 4 downwards so as to cause pin 3 to enter hole 26, 27.

In this position, shelf 4 is located horizontally.

In this position the shelf is securely attached to upright 5 and any accidental separation of the shelf from uprights 5 is prevented by the conformation of system 100.

Inner walls 14, 15 of upper front edge 114 and lower front edge 115 of first supporting element 1 exert a tensile force on head 3'a of second pin 3', and inner walls 28, 29 of second upper front edge 214 and lower front edge 215 of second supporting element 2 exert a tensile force on the head of 3a of pin 3, thus preventing pins 3 and 3' from leaving first and second supporting elements 1, 2 respectively through lateral movement in the direction of transverse axis Y.

In addition to this the distance of length Z2 between hole 26, 27 and corresponding slide channel 24, 25 with respect to vertical axis Z prevents shelf 4 from moving along longitudinal axis of movement X.

With the system according to the invention in order to extract shelf 4 from uprights 5, it is necessary to raise shelf 4 moving pin 3 into slide channel 24 or 25 and subsequently pull shelf 4 in the direction of longitudinal axis of movement X.

In the case where, as mentioned above, holes 26, 27 are at a distance from extremities 24a or 25a of corresponding slide channel 24, 25, both along vertical axis Z and along longitudinal axis of movement X', when shelf 4 is inserted onto upright 5, after shelf 4 has been pushed in a vertical direction along vertical axis Z, pushing shelf 4 downwards or upwards, depending upon the shape of the slots so as to cause the pin to leave the slide channel, the user exerts a further force to move the shelf along longitudinal axis X in one of the two directions in order to cause pin 3 to enter hole 26 or 27.

In this version, as mentioned, pin 3 makes a "C" or step-shaped complex movement B.

Thanks to the invention a simple fastening system which is secure and strong over time is therefore obtained.

Preferably first and second supporting elements 1, 2 are constructed as a single body by moulding plastics material.

Preferably, as mentioned, shelf 4 is fitted at ninety degrees with respect to upright 5, but further orientations can be achieved with the system according to the invention.

If appropriate the abovementioned operation may be repeated in order to attach various shelves in the item of furniture to the uprights.

## Claims

1. A fastening system (100) for attaching a shelf (4) or other supporting member of furniture to a structure (5) of an item of furniture comprising:
- a first supporting element (1) provided with a main body (11) shaped so as to form a through groove (12) in which a connecting pin (3, 3') can be housed, said pin (3, 3') being able to move within the groove (12) along an axis of movement (X) defined thereby and with a securing member (117) to anchor said first supporting element (1) to said shelf (4),
- a second supporting element (2) provided with a main body (21) shaped so as to form a slot (22, 23) comprising a slide channel (24, 25) for the insertion of a connecting pin (3, 3'), said pin (3, 3') being able to slide within the slide channel (24, 25) along a further axis of movement (X') and with a securing member (217) to secure said second supporting element (2) to said shelf (4),
- said slot (22, 23) comprising a hole (26, 27) communicating with said slide channel (24, 25) to allow said pin (3) to move between said slide channel (24, 25) and said hole (26, 27), said hole (26, 27) being intended to house the pin (3),
- **characterised in that** said hole (26, 27) is at a distance from said further axis of movement (X') in the direction of a vertical axis (Z) so as to prevent said connecting pin (3) from escaping through movement along the further axis of movement (X').

2. A fastening system according to claim 1, wherein said second supporting element (2) is provided with two slots (22, 23) located symmetrically with respect to the vertical axis (Z).

3. A fastening system according to claim 1 or 2, wherein said groove (12) is bounded by a rear wall (111), an upper wall (112) and a lower wall (113) shaped so as to form a housing within which a head (3a, 3'a) of said pin (3, 3') can move, said first supporting element (1) being further provided with a pair of edges (114, 115) projecting from the upper wall (112) and lower wall (113) respectively so as to form a front opening (116) into said groove (12) of width (d) less than the width (D) of said groove (12) to prevent said head (3a, 3'a) from escaping from said groove (12) as a result of movement along an axis transverse to the longitudinal axis of movement (X).

4. A fastening system according to any one of the preceding claims, wherein said upper wall (112) and said lower wall (113) are provided with inclined ramps (13) at the longitudinal extremities of said supporting element (1) to form entry openings (30) into said groove (12) which are of dimensions greater than the dimensions of said groove (12) in the direction of the vertical axis (Z) and favour entry of said head (3a, 3'a) into said groove (12).

5. A fastening system according to any one of the preceding claims, wherein said inner walls (14, 15) of said upper front edge (114) and lower front edge (115) facing said groove (12) are inclined at an angle of inclination α of between 1° and 25°, preferably between 1° and 10°, with respect to the direction of the longitudinal axis of movement (X) to vary the distance (W) between said inner walls (14, 15) and said rear wall (111) along the longitudinal direction of the first supporting element (1).

6. A fastening system according to the preceding claim, wherein said inner walls (14, 15) are inclined so that the distance (W) is a maximum at the openings (17) into said groove (12) and a minimum in a central portion of said supporting element (1).

7. A fastening system according to any one of the preceding claims, wherein said second supporting element (2) comprises two slots (22, 23) arranged symmetrically with respect to a transverse axis (Y) of said second supporting element (2).

8. A fastening system according to any one of the preceding claims, wherein second inner walls (28, 29) of said second upper front edge (214) and lower front edge (215) are inclined at a further angle of inclination β of between 1° and 25°, preferably between 1° and 10°, along the direction of the longitudinal axis of movement (X) so as to vary said further distance (W2) between said second inner walls (28, 29) and said second rear wall (211) along said slide channel (24, 25).

9. A fastening system according to the preceding claim, wherein said second inner walls (28, 29) are inclined so that said further distance (W2) is a maximum at said entry openings (22a, 23a) into said slots (22, 23) and a minimum at said holes (26, 27).

10. A shelf (4) comprising a pair of holes formed in at least one longitudinal edge (41) thereof and arranged so as to receive a first and a second supporting element (1, 2) respectively of the fastening system according to any one of the preceding claims.

11. Furniture comprising at least one upright (5) to which is attached at least one shelf according to the preceding claim.
